# EUROPÄISCHE PATENTANMELDUNG

(11) **EP 1 762 735 A1**
(43) Veröffentlichungstag der Anmeldung: **14.03.2007**
(21) Anmeldenummer: 05019535.3
(22) Anmeldetag: 08.09.2005
(51) Int. Cl.: F16D 3/223, F16D 3/84

(54) **Vorspannung durch Faltenbalg für ein Festgelenk nach Gegenbahnprinzip**

(71) Anmelder: GKN Driveline International GmbH, 53797 Lohmar (DE)
(72) Erfinder: Hildebrandt, Wolfgang, Dr.-Ing., 53721 Siegburg (DE); Weckerling, Thomas, Dipl.-Ing.(FH), 53797 Lohmar (DE); Maucher, Stephan, Dipl.-Ing. (FH), 53721 Siegburg (DE)
(74) Vertreter: Neumann, Ernst Dieter

(57) **Zusammenfassung**

Gegenbahngelenk 11 mit einem Gelenkaußenteil 12 mit zwei Gruppen von ersten Kugelbahnen 13₁, einem Gelenkinnenteil 14 mit zwei Gruppen von zweiten Kugelbahnen 15₁, ersten Bahnpaaren 13₁ aus ersten und zweiten Kugelbahnen, die sich in einer ersten axialen Richtung erweitern und erste Kugeln 16₁ aufnehmen, sowie zweiten Bahnpaaren aus ersten und zweiten Kugelbahnen, die sich in einer zweiten entgegengesetzten axialen Richtung erweitern und zweite Kugeln aufnehmen, einem Kugelkäfig, der die ersten und zweiten Kugeln 16₁ in ersten und zweiten Käfigfenstern in einer gemeinsamen Ebene hält, einer mit dem Gelenkinnenteil 14 fest verbundenen Welle 21, sowie einem Faltenbalg 24 zur Abdichtung des Gelenks, der an seinem einen Ende zumindest mittelbar mit dem Gelenkaußenteil 12 und an seinem anderen Ende mit der Welle 21 fest verbunden ist, wobei der Faltenbalg 24 so eingebaut ist, daß eine axiale Druckvorspannkraft F_{FB} im Faltenbalg 24 aufgebaut wird, die das Gelenkaußenteil 12 und die Welle 21 axial voneinander weg beaufschlagt.

## Beschreibung

Die Erfindung betrifft ein Gegenbahngelenk mit einem Gelenkaußenteil mit zwei Gruppen aus ersten Kugelbahnen, einem Gelenkinnenteil mit zwei Gruppen aus zweiten Kugelbahnen, ersten Bahnpaaren aus ersten und zweiten Kugelbahnen, die sich in der Gelenkmittelebene E in einer ersten axialen Richtung erweitern und erste Kugeln aufnehmen, sowie zweiten Bahnpaaren aus ersten und zweiten Kugelbahnen, die sich in der Gelenkmittelebene E in einer zweiten entgegengesetzten axialen Richtung erweitern und zweite Kugeln aufnehmen, einem Kugelkäfig, der die ersten und zweiten Kugeln in ersten und zweiten Käfigfenstern in einer gemeinsamen Ebene hält, einer mit dem Gelenkinnenteil fest verbundenen Welle, sowie einem Faltenbalg zur Abdichtung des Gelenks, der an seinem einen Ende zumindest mittelbar mit dem Gelenkaußenteil und an seinem anderen Ende mit der Welle fest verbunden ist.

Gegenbahngelenke gehören aufgrund ihrer Bahngestaltung zu den Gleichlauffestgelenken, die eine wesentliche Axialverschiebung zwischen Gelenkaußenteil und Gelenkinnenteil nicht zulassen. Sie dienen zur Drehmomentübertragung in Gelenkwellen, insbesondere in den Seitenwellen oder der Längswelle von Fahrzeugantriebssträngen. Gegenbahngelenke sind in Ausführungen mit jeweils vier ersten Bahnpaaren und vier zweiten Bahnpaaren, die sich über dem Umfang abwechseln, und damit insgesamt acht Kugeln haben, ebenso bekannt wie in Ausführungen mit fünf ersten Bahnpaaren und fünf zweiten Bahnpaaren, die sich über dem Umfang abwechseln und somit zehn Kugeln haben. Sofern Gegenbahngelenke in Seitenwellen in Kombination mit einem weiteren Gleichlauffestgelenk verwendet werden, wird zusätzlich eine Axialverschiebeeinheit in der Seitenwelle eingesetzt.

Aufgrund der in der Gelenkmittelebene im wesentlichen symmetrischen Gestaltung der ersten Bahnpaare und der zweiten Bahnpaare sowie der gleichen Anzahl von ersten Bahnpaaren und zweiten Bahnpaaren haben Gegenbahngelenke die Eigenschaft, daß das Gelenkinnenteil im wesentlichen axialkraftfrei im Gelenkaußenteil geführt wird. Dies hat erhebliche Vorteile im Hinblick auf einen guten Wirkungsgrad, da innere Reibungskräfte im Gegenbahngelenk dadurch gering gehalten sind.

Infolge der Axialkraftfreiheit und aufgrund eines funktionsbedingt etwa größeren Axialspieles in Gegenbahngelenken kann es in bestimmten Betriebszuständen und bei bestimmten Toleranzen zu einer instabilen axialen Lage des Gelenkinnenteils und des Kugelkäfigs innerhalb des Gelenkaußenteils kommen. Dies kann zu einem unkontrollierten Anlaufen des Gelenkinnenteils und/oder des Kugelkäfigs in eine bevorzugte Anschlagrichtung am Gelenkaußenteil oder zu axialen Schwingungsbewegungen, insbesondere im Falle eines Lastwechsels, innerhalb des Gelenkes führen. Hiermit können unerwünschte Geräuschentwicklungen verbunden sein.

Der Erfindung liegt hiervon ausgehend die Aufgabe zugrunde, unkontrollierte Axialbewegungen der Gelenkkomponenten zueinander abzustellen. Die Lösung hierfür besteht in einem Gegenbahngelenk mit einem Gelenkaußenteil mit zwei Gruppen aus ersten Kugelbahnen, einem Gelenkinnenteil mit zwei Gruppen aus zweiten Kugelbahnen, ersten Bahnpaaren aus ersten und zweiten Kugelbahnen, die sich in einer ersten axialen Richtung erweitern und erste Kugeln aufnehmen, sowie zweiten Bahnpaaren aus ersten und zweiten Kugelbahnen, die sich in einer zweiten entgegengesetzten axialen Richtung erweitern und zweite Kugeln aufnehmen, einem Kugelkäfig, der die ersten und zweiten Kugeln in ersten und zweiten Käfigfenstern in einer gemeinsamen Ebene hält, einer mit dem Gelenkinnenteil fest verbundenen Welle, sowie einem Faltenbalg zur Abdichtung des Gelenks, der an seinem einen Ende zumindest mittelbar mit dem Gelenkaußenteil und an seinem anderen Ende mit der Welle fest verbunden ist, bei welchem der Faltenbalg so eingebaut ist, daß eine axiale Druckvorspannkraft F_{FB} im Faltenbalg aufgebaut wird, die das Gelenkaußenteil und die Welle axial voneinander weg beaufschlagt.

Mit der auf einer inneren Druckvorspannkraft des Faltenbalges beruhenden axialen Vorspannung zwischen dem Gelenkaußenteil und der Welle besteht eine gleich große axiale Vorspannung zwischen dem Gelenkaußenteil und dem mit der Welle drehfest und axialfest verbundenen Gelenkinnenteil. Das Gelenkinnenteil stützt sich somit dauernd über die Gelenkkugeln und/oder den Kugelkäfig am Gelenkaußenteil ab, wobei die Abstützkraft, die drehmomentunabhängig ist, gering gehalten werden kann, so daß die Vorteile geringer Reibung im Gelenk weitgehend beibehalten werden. Andererseits hat jedoch in vorteilhafter Weise das Gelenkinnenteil eine definierte Position im Gelenkaußenteil, so daß die genannten Nachteile hinsichtlich Schwingungen und Geräuschentwicklung unterdrückt werden.

Die Druckvorspannkraft im Faltenbalg wird sinnvollerweise dadurch erzeugt, daß der Faltenbalg gegenüber seiner spannungsfreien Herstellänge L₀ mit verkürzter Einbaulänge L_{X} verbaut ist, wobei diese Verkürzung auch noch Bestand hat, wenn sich das Gelenkinnenteil unter Überbrückung der Axialspiele über die Kugeln und/oder den Käfig an das Gelenkaußenteil angelegt hat.

Der Faltenbalg besteht hierbei in bevorzugter Ausgestaltung aus thermoplastischem Elastomer (TPE), welches eine relativ hohe Formsteifigkeit hat.

Das Gelenkaußenteil kann in vorteilhafter Weise einen axial entgegengesetzt zum Eintritt der Welle in das Gelenkaußenteil angeformten Boden haben. Weiterhin ist es möglich, daß die Bahnpaare, die sich in der Mittelebene in Richtung zum Gelenkboden hin öffnen, einen S-förmigen Verlauf haben, so daß sich die Bahnen zur Gelenköffnung hin schließlich wieder erweitern. Die Erfindung ist jedoch in keiner Weise auf bestimmte Bahnformen beschränkt, so lange die Gegenbahncharakteristik gemäß dem Gattungsbegriff gewahrt ist.

Ein bevorzugtes Ausführungsbeispiel der Erfindung ist in den Zeichnungen dargestellt und wird nachstehend beschrieben.
- Figur 1: zeigt ein erfindungsgemäßes Gegenbahngelenk im Querschnitt;

- Figur 2: zeigt ein erfindungsgemäßes Gegenbahngelenk im Längsschnitt A-A nach Figur 1;
- Figur 3: zeigt ein erfindungsgemäßes Gegenbahngelenk im Längsschnitt B-B nach Figur 1.

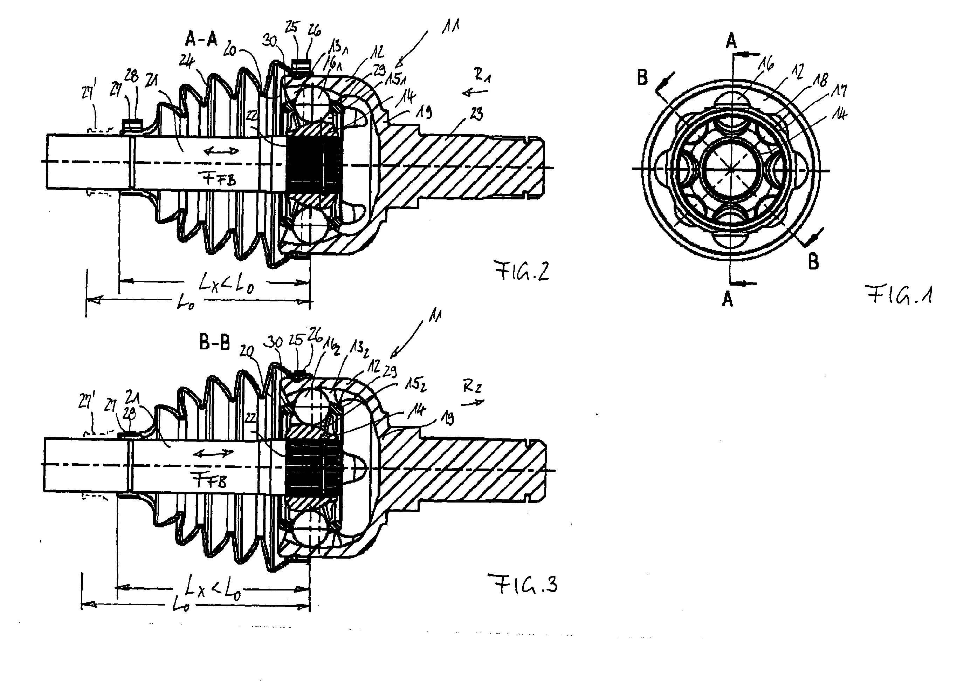

Die Figuren 1 bis 3 werden nachstehend gemeinsam beschrieben. In den Figuren ist ein erfindungsgemäßes Gegenbahngelenk 11 mit einem Gelenkaußenteil 12, einem Gelenkinnenteil 14, drehmomentübertragenden Kugeln 16 und einem Kugelkäfig 17 gezeigt. Im Längsschnitt A-A nach Figur 2 sind erste äußere Kugelbahnen 13₁ im Gelenkaußenteil 12 und zweite innere Kugelbahnen 15₁ im Gelenkinnenteil 14 geschnitten, die jeweils Bahnpaare bilden, die eine drehmomentübertragende Kugel 16₁ aufnehmen. Die Bahnpaare 13₁, 15₁ öffnen sich in einer ersten Richtung R1 vom Boden 19 des Gelenkaußenteils zur Öffnung 20 des Gelenkaußenteils. Im Längsschnitt B-B nach Figur 3 sind erste äußere Kugelbahnen 13₂ im Gelenkaußenteil und zweite innere Kugelbahnen 15₂ im Gelenkinnenteil 14 geschnitten, die jeweils Bahnpaare bilden, die eine drehmomentübertragende Kugel 16₂ aufnehmen. Die Bahnpaare 13₂, 15₂ öffnen sich in einer zweiten Richtung R2, die von der Öffnung 20 des Gelenkaußenteils zum Boden 19 des Gelenkaußenteils gerichtet ist. An den Boden 19 des Gelenkaußenteils 12 ist ein Wellenzapfen 23 angeformt. Das Gelenkinnenteil 14 hat eine Einstecköffnung 22, in die eine Welle 21 drehfest und axial gesichert eingesteckt ist. Das Gelenk wird von einem Faltenbalg 24 abgedichtet, der ein erstes Ende 25 mit einem Bund größeren Durchmessers hat, das mittels eines Spannbandes 26 auf dem Gelenkaußenteil 12 festgelegt ist, und der ein zweites Ende 27 mit einem Bund kleineren Durchmessers hat, das mittels eines Spannbandes 28 auf der Welle 21 festgelegt ist. Der Faltenbalg 24 steht in der gezeigten Einbaulage unter einer inneren Druckvorspannkraft F_{FB}, der das Ende 27 des Faltenbalges vom Ende 26 des Faltenbalges wegdrückt. Auf diese Weise drückt der unter Druckvorspannung stehende Faltenbalg das Gelenkinnenteil 12 mittels der Welle 21 in Richtung zur Öffnung 20 des Gelenkaußenteils 12, d. h. tendenziell aus diesem heraus. Hierbei stützt sich das Gelenkinnenteil 14 über die Kugeln 16 und den Kugelkäfig 17 am Gelenkaußenteil 12 ab. Dies geschieht über einen Flächenkontakt zwischen einer kugeligen Außenfläche 30 des Kugelkäfigs 17 und einer innenkugeligen Führungsfläche 29 im Gelenkaußenteil 12, die miteinander in gleitendem Kontakt sind. Ungeachtet der Axialspiele der Kugeln in den Kugelbahnen wird das Gelenkinnenteil 14 hierdurch gegenüber dem Gelenkaußenteil 12 spielfrei gehalten. Die Druckvorspannung F_{FB} des Faltenbalges 24 ist dadurch aufgebaut, daß er mit einer verkürzten Einbaulänge L_{X} verbaut ist, die kleiner ist als die spannungsfreie Herstellänge L₀ des Faltenbalges, die mit einer gestrichelten Kontur des zweiten Endes 27' angedeutet ist.

Bezugszeichenliste
- 11: Gelenk
- 12: Gelenkaußenteil
- 13: Erste Kugelbahn
- 14: Gelenkinnenteil
- 15: Zweite Kugelbahn
- 16: Kugel
- 17: Kugelkäfig
- 18: Käfigfenster
- 19: Boden
- 20: Öffnung
- 21: Welle
- 22: Einstecköffnung
- 23: Wellenzapfen
- 24: Faltenbalg
- 25: Bund
- 26: Spannband
- 27: Bund
- 28: Spannband

## Patentansprüche

1. Gegenbahngelenk (11) mit einem Gelenkaußenteil (12) mit zwei Gruppen von ersten Kugelbahnen (13₁, 13₂), einem Gelenkinnenteil (14) mit zwei Gruppen von zweiten Kugelbahnen (15₁, 15₂), ersten Bahnpaaren (13₁, 15₁) aus ersten und zweiten Kugelbahnen, die sich in einer ersten axialen Richtung erweitern und erste Kugeln (16₁) aufnehmen, sowie zweiten Bahnpaaren (13₂, 15₂) aus ersten und zweiten Kugelbahnen, die sich in einer zweiten entgegengesetzten axialen Richtung erweitern und zweite Kugeln (16₂) aufnehmen, einem Kugelkäfig (17), der die ersten und zweiten Kugeln (16₁, 16₂) in ersten und zweiten Käfigfenstern (18₁, 18₂) in einer gemeinsamen Ebene hält, einer mit dem Gelenkinnenteil (14) fest verbundenen Welle (21), sowie einem Faltenbalg (24) zur Abdichtung des Gelenks, der an seinem einen Ende zumindest mittelbar mit dem Gelenkaußenteil (12) und an seinem anderen Ende mit der Welle (21) fest verbunden ist,
**dadurch gekennzeichnet,**
**daß** der Faltenbalg (24) so eingebaut ist, daß eine axiale Druckvorspannkraft F_{FB} im Faltenbalg (24) aufgebaut wird, die das Gelenkaußenteil (12) und die Welle (21) axial voneinander weg beaufschlagt.

2. Gegenbahngelenk nach Anspruch 1,
**dadurch gekennzeichnet,**
**daß** der Faltenbalg (24) gegenüber seiner spannungsfreien Herstellänge (L₀) mit verkürzter Einbaulänge (L_{X}) verbaut ist.

3. Gegenbahngelenk nach einem der Ansprüche 1 oder 2,
**dadurch gekennzeichnet,**
**daß** der Faltenbalg (24) aus thermoplastischem Elastomer (TPE) besteht).

4. Gegenbahngelenk nach einem der Ansprüche 1 bis 3,
**dadurch gekennzeichnet,**
**daß** das Gelenkaußenteil (12) axial entgegengesetzt zum Eintritt der Welle (21) einen angeformten Boden (19) hat.

5. Gegenbahngelenk nach einem der Ansprüche 1 bis 4,
**dadurch gekennzeichnet,**
**daß** es vier erste Bahnpaare (13₁, 15₁) und vier zweite Bahnpaare (13₂, 15₂) hat.

6. Gegenbahngelenk nach einem der Ansprüche 1 bis 5,
**dadurch gekennzeichnet,**
**daß** der Faltenbalg (24) mittels radialer Spannmittel, insbesondere Spannbändern (26, 28), mit seinen Enden (25, 27) auf dem Gelenkaußenteil (12) und/oder der Welle (21) festgelegt ist.

7. Gegenbahngelenk nach einem der Ansprüche 1 bis 5,
**dadurch gekennzeichnet,**
**daß** der Faltenbalg (24) mit seinen Enden formschlüssig in Umfangsnuten im Gelenkaußenteil (12) und/oder der Welle (21) eingreift.
